# EUROPÄISCHE PATENTSCHRIFT

(11) **EP 2 961 882 B1**
(45) Veröffentlichungstag und Bekanntmachung des Hinweises auf die Patenterteilung: **06.12.2017**
(21) Anmeldenummer: 14702866.6
(22) Anmeldetag: 06.02.2014
(51) Int. Cl.: D21B 1/32, D21C 9/18, D21D 5/02, D21H 27/10

(54) **VERFAHREN ZUR BILDUNG UND BEHANDLUNG EINER FASERSTOFFSUSPENSION**
METHOD OF FORMING AND TREATING A FIBROUS SUSPENSION
PROCÉDÉ DE FORMATION ET DE TRAITEMENT D'UNE SUSPENSION DE MATIÈRE FIBREUSE

(30) Priorität: 01.03.2013 DE 102013203472
(43) Veröffentlichungstag der Anmeldung: 06.01.2016
(73) Patentinhaber: Voith Patent GmbH, 89522 Heidenheim (DE)
(72) Erfinder: BRETTSCHNEIDER, Werner, 88287 Grünkraut (DE); ALBRECHT, Falk, 88410 Bad Wurzach (DE); PESCHL, Alexander, 88214 Ravensburg (DE); BADER, Fanny, 88260 Argenbühl (DE)
(86) Internationale Anmeldenummer: PCT/EP2014/052304
(87) Internationale Veröffentlichungsnummer: WO 2014/131592

(56) Entgegenhaltungen:
- EP-A1- 0 175 128
- EP-A1- 0 261 025
- EP-A1- 1 798 329
- DE-A1-102007 017 987
- DE-A1-102008 013 458

## Beschreibung

Die Erfindung betrifft ein Verfahren zur Bildung und Behandlung einer, zur Herstellung von Karton oder Verpackungspapieren geeigneten Faserstoffsuspension, wobei die Faserstoffsuspension von einer Auflöse-Stufe über mehrere Behandlungs-Stufen zumindest teilweise zu einer Entwässerungs-Stufe geführt wird.

In der Auflöse-Stufe erfolgt die Auflösung der Fasern sowie des Altpapiers. Daran schließen sich mehrere Prozessschritte zur Behandlung der Faserstoffsuspension an, bis die Faserstoffsuspension die geforderten Parameter erfüllt und an eine Maschine zur Herstellung einer Faserstoffbahn übergeben werden kann.

Bei der Wiederaufbereitung von Altpapier für Karton und Verpackungspapiere ist es üblich, den Gesamtfaserstoffstrom zu fraktionieren und die sich dabei ergebenden Teilfraktionen gesondert weiter zu behandeln.

Dabei durchläuft die Faserstoffsuspension vor der Fraktionierung noch eine LochSortierung sowie eine Schwerteil-Reinigung.

Dies ist relativ aufwendig. Die EP 0261 025 A1 offenbart ein Verfahren zur Bildung und Behandlung einer aus Altpapier gebildeten und zur Herstellung von hochwertigen Papieren geeigneten Faserstoffsuspension, wobei die Faserstoffsuspension von einer Auflöse-Stufe bei einer Stoffdichte von 5 bis 15 % über eine Vorsortierung bei einer Stoffdichte von 2 bis 3 % zu einer Fraktionier-Stufe zur Bildung einer Kurfaserfraktion und einer Langfaserfraktion geführt wird. Die Langfaserfraktion, die zu einer Entwässerungs-Stufe geführt wird, hat am Auslauf der Fraktionier-Stufe eine Stoffdichte von 3 bis 4 %. Die Kurzfaserfraktion wird über eine Flotations-Stufe bei einer Stoffdichte von 1 bis 1,5 % zu einer Entwässerungs-Stufe geführt. Die EP 0 175 128 A1 offenbart ein Verfahren zur Papierstoffaufbereitung, bei welchem das Ausgangsmaterial, z.B. Altpapier, unter Vermeidung aufwendiger Verdünnung und Wiedereindickung durchgehend bis zur Stapelung im Dickstoffbereich im Bereich von 10 bis 15% Feststoffgehalt verarbeitet wird. Nach der Vereinzelung der Altpapierballen werden Fremdstoffe zerkleinert und aussortiert und anschließend im Dickstoffbereich in einen Pulper in Fasern zerlegt. Nachfolgend wird das zerfaserte Material unter Beibehaltung des Dickstoffbereiches zwischengelagert oder gestapelt. Anschließend wird das Material mit Wasser versetzt, so dass eine Feststoffkonzentration von ca. 3 - 6 % eingestellt wird, und in einem Entstipper gereinigt. Daraufhin wird das entstippte Material einer Deinking-Einrichtung zugeführt. Nach Leitung der entfärbten Fasersuspension durch eine Eindickeinrichtung wird die fertig aufbereitete Stoffsuspension der Papiermaschine zugeführt.

Die Aufgabe der Erfindung ist es daher den Aufwand für die Behandlung der Faserstoffsuspension zu vermindern ohne die Qualität des erzeugten Fertigstoffes wesentlich zu beeinträchtigen.

Erfindungsgemäß wurde die Aufgabe durch ein Verfahren gemäß Anspruch 1 gelöst. Durch diese relativ hohe Stoffdichte vermindert sich die Menge der zu behandelnden Faserstoffsuspension erheblich, weshalb die entsprechenden Behandlungsaggregate kleiner ausgeführt werden können und weniger Energie benötigen. Dabei wird bewusst in Kauf genommen, dass einige Behandlungsaggregate bei diesen hohen Stoffdichten, insbesondere Hydrozyklone zur Reinigung der Faserstoffsuspension etwas weniger effizient arbeiten.

Da es bei der Behandlung der Faserstoffsuspension zu einer Verdünnung kommt, beträgt die Stoffdichte der Faserstoffsuspension am Auslauf der Auflöse-Stufe mindestens 5 %, vorzugsweise wenigstens 5,5 % und liegt insbesondere zwischen 5,5 und 6%. Hierfür eignen sich besonders Stofflöser mit einem am Boden des Behälters exzentrisch zur Mitte des Behälters angeordneten Rotor. Dabei sollte der Behälter auch einen oder mehrere miteinander verbundene Kegelstümpfe aufweisen, deren größter Durchmesser sich an die Seitenwand des Behälters anschließt und die so angeordnet sind, dass ihr Innendurchmesser von oben nach unten abnimmt. Ergänzt werden kann der Stofflöser mit Vorteil noch durch Strömungsbarrieren an der Seitenwand des Behälters.

Dabei erfolgt die Reinigung der Faserstoffsuspension zwischen dem Auslauf der Auflöse-Stufe und einer ersten Fraktionier-Stufe zur Bildung einer Kurzfaserfraktion mit einem hohen Anteil an kurzen Fasern und einer Langfaserfraktion mit einem hohen Anteil an langen Fasern ausschließlich über einen oder mehrere Hydrozyklone. Der erste Hydrozyklon wirkt hier als Dickstoffreiniger, wobei die Stoffdichte der Faserstoffsuspension bei dem ersten Hydrozyklon zwischen 5 und 6 %, vorzugsweise zwischen 5,3 und 5,7% liegt.

Bei Hydrozyklonen erfolgt die Reinigung, d.h. insbesondere die Ausschleusung von Schwerteilen unter Nutzung eines Zentrifugalfeldes. Diese Reinigung entlastet und schützt die folgende Fraktionier-Stufe bereits in ausreichendem Maße.

Um die Effizienz der Reinigung bei den Hydrozyklonen insbesondere bei hohen Stoffdichten zu verbessern, hat dessen Innenfläche im Bereich des Schwerteilauslasses einen polygonförmigen Querschnitt.

Die in der Regel hierbei zum Einsatz kommenden Fraktionier-Stufen arbeiten bereits jetzt mit relativ hohen Überlauf- bzw. Rejectraten. Daher können diese auch die, durch das Weglassen der Loch- oder Schlitzsortierung (Grobsortierung) erhöhte Störstofffracht problemlos verkraften. Wegen der hohen Qualitätsanforderungen sowie der hohen Belastbarkeit wird die erste Fraktionier-Stufe von einem Schlitzsortierer gebildet, der ein, um eine Siebachse rotationssymmetrisch ausgebildetes Siebelement mit Sieböffnungen in Form von Schlitzen mit einer Schlitzbreite von höchstens 0,25 mm besitzt.

Dementsprechend wird die Faserstoffsuspension während der ersten Fraktionierung zum ersten Mal durch Schlitze geführt.

Um die Ausbeute zu erhöhen, ist es vorteilhaft, wenn das Reject eines Hydrozyklon in wenigstens einen weiteren Hydrozyklon geleitet und dessen Accept der Langfaserfraktion zugeführt wird. Im Interesse einer umfassenden Nutzung der Vorteile der Erfindung beträgt die Stoffdichte vor der ersten Fraktionierstufe zumindest 70 %, vorzugsweise wenigstens 80 % der Stoffdichte am Auslauf der Auflöse-Stufe. Nach der Reinigung der Faserstoffsuspension wird zumindest die Langfaserfraktion durch eine Entwässerungs-Stufe geführt. Im Ergebnis führt die höhere Stoffdichte dann bei den folgenden Behandlungs-Stufen zu einer verbesserten Effizienz.

Je nach Art und Qualität der Faserstoffsuspension kann es dabei von Vorteil sein, wenn die Lang- und die Kurzfaserfraktion gemeinsam über wenigstens eine Entwässerungs-Stufe oder aber über separate Entwässerungs-Stufen geführt werden.

Falls die Lang- und die Kurzfaserfraktion durch eine gemeinsame Entwässerungs-Stufe, insbesondere in Form eines Scheibenfilters geführt werden, so sollte diese separate Kammern zur Eindickung beider Fraktionen besitzen, wobei das Filtrat aber vorzugsweise gemeinsam abgeführt wird.

Zur Minimierung des Aufwandes kann allerdings auch nur die Langfaserfraktion über eine Entwässerungs-Stufe geführt werden.

Da die Kurzfaserfraktion oft bereits den geforderten Qualitäten genügt, ist es nicht unbedingt erforderlich, dass diese eine Sortierung über Löcher oder Schlitze oder überhaupt eine Behandlungs-Stufe in Form eines Sortierers oder eines Hydrozyklons durchläuft.

Eine weitere Fraktionierung der Kurzfaserfraktion kann jedoch zur Qualitätssteigerung vorteilhaft sein, wobei der Anteil mit den längeren Fasern der Langfaserfraktion zugeführt werden sollte. Auf diese Weise kann eine überdurchschnittliche Faserlänge in der Langfaserfraktion erzielt werden.

Auch die Langfaserfraktion kann durch eine zusätzliche Fraktionier-Stufe geleitet werden, wobei die anfallenden Fraktionen separat weiterbehandelt werden sollten.

Unabhängig davon sollte zur Verbesserung der Homogenität und der Festigkeitseigenschaften der Faserstoffsuspension zumindest eine Behandlungs-Stufe der Langfaserfraktion von einem Disperger gebildet werden.

Wegen der hohen Stoffdichte werden die Entwässerung-Stufen mit Vorteil von Schneckenpressen, Doppelsiebpressen, Eindickschnecken, Scheibeneindickern o.ä. aber nicht von einem Scheibenfilter gebildet.

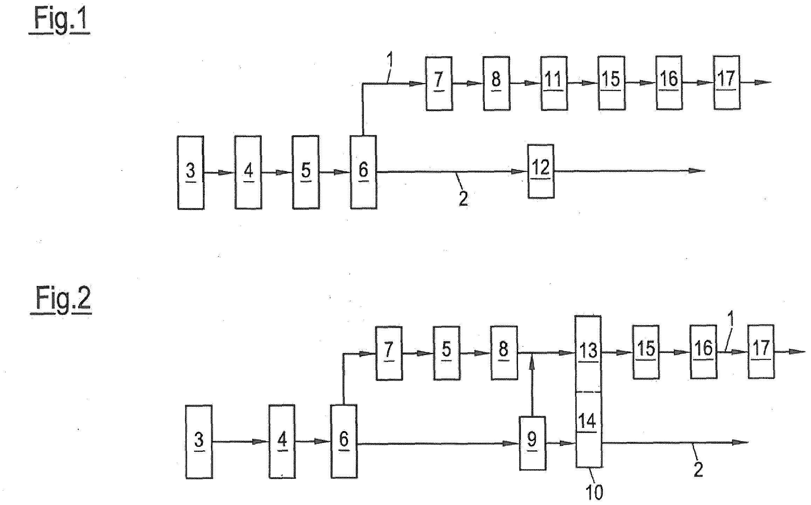

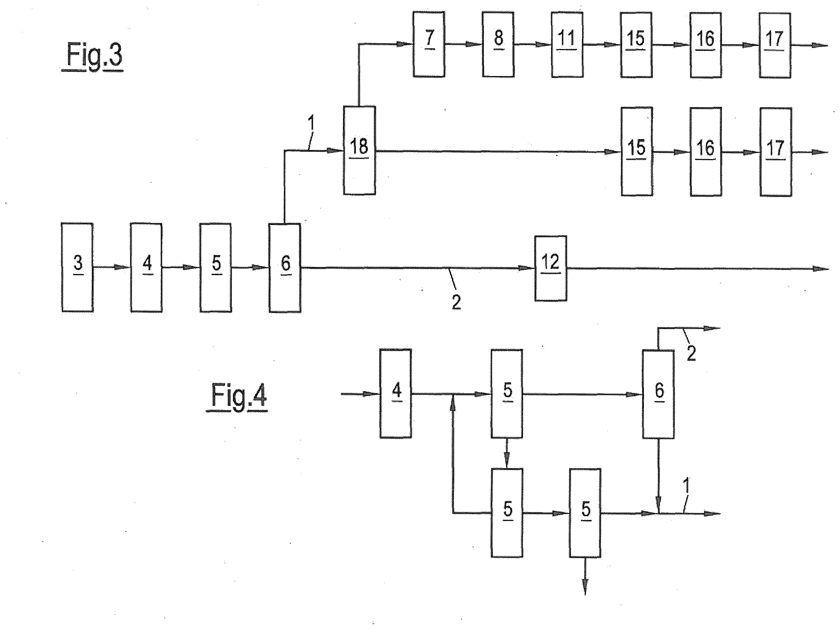

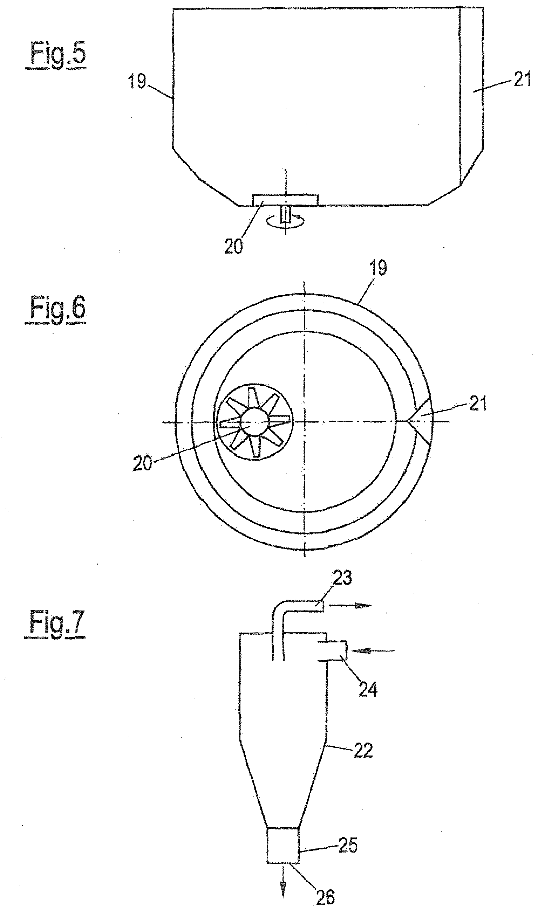

Nachfolgend soll die Erfindung an mehreren Ausführungsbeispielen näher erläutert werden.
In der beigefügten Zeichnung zeigen die Figuren 1 bis 3 unterschiedliche Anlagenschemata zur Faserstoffbehandlung, Figur 4 einen Ausschnitt der Anlage, Figur 5 einen Querschnitt durch eine Auflöse-Stufe 3, Figur 6 eine Draufsicht nach Figur 5 und Figur 7 einen Querschnitt durch einen Hydrozyklon.

Dabei soll die Faserstoffsuspension zumindest teilweise aus Altpapier gebildet werden und zur Herstellung von Karton- und Verpackungspapieren geeignet sein.

Gemeinsam ist den drei Ausführungen gemäß den Figuren 1 bis 3, dass die Stoffaufbereitung eine Auflösungs-Stufe 3 zur Auflösung des Altpapiers und eventuell auch anderer Faserstoffe in Form eines Pulpers o.ä. sowie zumindest eine folgende Fraktionier-Stufe 6 zur Bildung einer Lang- 1 und einer Kurzfaserfraktion 2 besitzt, wobei zumindest die Langfaserfraktion 1 zu einer Entwässerungs-Stufe 10,11,12,15 geführt wird und die Stoffdichte der Faserstoffsuspension zwischen dem Auslauf der Auflöse-Stufe 3 und dem Einlauf der ersten Entwässerungs-Stufe 10,11,12,15 mindestens 3 % beträgt. Diese hohe Stoffdichte reduziert den Aufwand und die Energie zur Behandlung der Faserstoffsuspension erheblich, auch wenn dadurch die Wirksamkeit bestimmter Behandlungsaggregate, wie beispielsweise der Hydrozyklone beeinträchtigt wird.
Außerdem ist vor der ersten Fraktionier-Stufe 6 keine Sortier-Stufe mit Loch- oder Schlitzsortierung angeordnet.
Um diese hohe Stoffdichte durchgehend gewährleisten zu können, liegt die Stoffdichte der Faserstoffsuspension am Auslauf der Auflöse-Stufe 3 zwischen 5,5 und 6%.
Hierfür eignen sich insbesondere Pulper mit exzentrisch zur Behältermitte am Behälterboden angeordnetem Rotor 20, wie in Figur 5 und 6 dargestellt. Der Rotor 20 entfaltet seine Wirkung besonders gut, wenn der Boden mehrere, miteinander verbundene Kegelstümpfe aufweist, deren größter sich mit seinem größten Durchmesser an der Seitenwand des Behälters 19 anschließt und die so angeordnet sind, dass ihre Innendurchmesser von oben nach unten kleiner werden.

An der dem Rotor 20 gegenüberliegenden Innenseite der Seitenwand des Behälters 19 befindet sich eine vertikale Strömungsbarriere 21, die sich vom Behälterboden bis über den Suspensionspegel hinaus erstreckt. Diese in den Behälter 19 hineinragende Strömungsbarriere 21 bremst die Umfangsströmung und unterstützt so die Auflösung.

Die Reinigung des Faserstoffsuspensionsstromes zwischen Auflöse-Stufe 3 und erster Fraktionier-Stufe 6 erfolgt ausschließlich über Reinigungs-Stufen 4,5 je in Form eines Hydrozyklons. Bei diesen Reinigungs-Stufen 4,5 kann es sich beispielsweise um eine Hochkonsistenzs-Reinigungsstufe 4 oder um eine Schwerteil-Reinigungs-Stufe 5 handeln.
Dabei liegt die Stoffdichte der Faserstoffsuspension bei dem ersten Hydrozyklon zwischen 5,3 und 5,7%.
Hydrozyklone sind in der Lage durch Zentrifugalkräfte Schwerteile in Faserstoffsuspensionen zu konzentrieren und herauszuleiten. Hierzu wird die Faserstoffsuspension entsprechend Figur 7 über einen Zulauf 24 tangential in das Innere des Hydrozyklons eingepumpt und im nach unten konischen Innenraum 22 in Rotation versetzt. Während die gereinigte Faserstoffsuspension als Gutstoff über den zentral oben angeordneten Auslauf 23 abgeführt wird, gelangen die Schwerteile über ein Verbindungsteil 25 zum Schwerteilauslass 26.
Wesentlich ist hierbei, dass die Innenfläche des Verbindungsteils 25 ein Polygon bildet. Durch diese Form kann die Rotation in Richtung Schwerteilauslass 26 reduziert werden, was wiederum den Verschleiß vermindert.

Die Fraktionier-Stufe 6 ist als Schlitz-Drucksortierer ausgebildet und trennt den Faserstoffsuspensionsstrom in eine Langfaserfraktion 1 mit einem hohen Anteil an langen Fasern und/oder hohem Störstoffgehalt und eine Kurzfaserfraktion 2 mit einem geringen Anteil an längeren Fasern und/oder einem niedrigen Störstoffgehalt. Da die erste Fraktionier-Stufe 6 bereits mit einer hohen Rejectrate betrieben wird, kann diese die höhere Störstofffracht - infolge der fehlenden Lochsortierung vor der Fraktionierung - problemlos verarbeiten. Die Stoffdichte am Einlauf der ersten Fraktionier-Stufe 6 liegt möglichst nahe an 5 %.

Nach der Fraktionierung wird die Langfaserfraktion 1 beispielhaft gemäß den Figuren 1 und 2 durch eine Grobsortier-Stufe 7, eine weitere Sortierstufe 8, mehrere Entwässerungs-Stufen 10,11,15, eine Dispergier-Stufe 16 und eine Refiner-Stufe 17 geleitet.
Bei geringer Störstofffracht kann auf die Grobsortier-Stufe 7 auch verzichtet werden.

Demgegenüber genügt die Qualität der Kurzfaserfraktion 2 in der Regel bereits den geforderten Qualitäten, weshalb diese oft nur noch über eine Entwässerungs-Stufe 10,12 geführt wird.

In Figur 1 durchläuft die Faserstoffsuspension nach der Auflöse-Stufe 3 und Hochkonsistenz-Reinigungs-Stufe 4 noch mindestens eine weitere Reinigungsstufe, beispielsweise wie hier eine Schwerteil-Reinigungs-Stufe 5 bevor die Faserstoffsuspension fraktioniert wird. Die Entwässerungs-Stufen 11,12,15 beider Fraktionen 1,2 sind separat ausgeführt.

Im Unterschied dazu wird bei Figur 2 nur die Langfaserfraktion 1 durch die Schwerteil-Reinigungs-Stufe 5 geleitet. Außerdem wird die Kurzfaserfraktion 2 durch eine weitere Fraktionier-Stufe 9 gefördert, wobei der Anteil mit langen Fasern der Langfaserfraktion 1 zugeführt wird.
Auf diese Weise lässt sich das Faserlängenverhältnis in der Langfaserfraktion 1 verändern.
Nach dieser weiteren Fraktionierung werden dann beide Fraktionen 1,2 in eine gemeinsame Entwässerungs-Stufe 10 geführt, wobei jeder Fraktion 1,2 eine separate Kammer 13,14 zur Eindickung zugeordnet ist. Allerdings wird das bei beiden Entwässerungen anfallende Filtrat hier gemeinsam ab- und einer Nutzung zugeführt.

Bei Figur 3 wird die Langfaserfraktion 1 durch eine weitere Fraktionier-Stufe 18 geleitet. Während die dabei gebildete Fraktion mit einem hohen Anteil an langen Fasern und/oder einem hohen Gehalt an Störstoffen durch mehrere Sortier-Stufen 7,8, über zwei Entwässerungs-Stufe 11,15 und eine Dispergier-Stufe 16 zur Refiner-Stufe 17 gelangt, wird die andere Fraktion mit einem geringen Anteil an langen Fasern und/oder einem geringen Störstoffgehalt nur durch eine Entwässerungs-Stufe 15, eine Dispergier-Stufe 16 und eine Refiner-Stufe 17 geleitet.

Um die Faserausbeute zu erhöhen, kann gemäß Figur 4 die Schwerteil-Reinigungs-Stufe 5 zwischen der Auflöse- 3 und der ersten Fraktionier-Stufe 6 auch von mehreren - hier drei - Hydrozyklonen gebildet werden. Dabei gelangt das Rejekt des ersten Hydrozyklons in einen zweiten Hydrozyklon. Während das Accept dieses zweiten Hydrozyklons zum Einlauf des ersten Hydrozyklons zurückgeführt wird, gelangt das Reject des zweiten Hydrozyklons in einen dritten Hydrozyklon, dessen Accept der Langfaserfraktion 1 zugemischt wird.

Als Entwässerungs-Stufen 10,11,12,15 eignen sich wegen der hohen Stoffdichte besonders Schneckenpressen oder Scheibenfilter.

Im Ergebnis wird die Stoffdichte im gesamten Prozess bei allen Ausführungen auf ein höheres Niveau gesetzt, was die zu behandelnden Volumenströme an Faserstoffsuspension senkt. Dies wiederum erlaubt kleinere Aggregate zur Behandlung der Faserstoffsuspension und senkt die hierfür nötige Energie.

## Patentansprüche

1. Verfahren zur Bildung und Behandlung einer, zur Herstellung von Karton oder Verpackungspapieren geeigneten Faserstoffsuspension, wobei die Faserstoffsuspension von einer Auflöse-Stufe (3) über mehrere Behandlungs-Stufen, die eine erste Fraktionier-Stufe (6) zur Bildung einer Kurzfaserfraktion (2) mit einem hohen Anteil an kurzen Fasern und einer Langfaserfraktion (1) mit einem hohen Anteil an langen Fasern umfassen, zumindest teilweise zu einer Entwässerungs-Stufe (10,11,12,15) geführt wird, wobei die Stoffdichte der Faserstoffsuspension am Auslauf der Auflöse-Stufe (3) mindestens 5 % beträgt, wobei die Stoffdichte der Faserstoffsuspension zwischen dem Auslauf der Auflöse-Stufe (3) und dem Einlauf der ersten Entwässerungs-Stufe (10,11,12,15) mindestens 3 % beträgt, wobei die Reinigung der Faserstoffsuspension zwischen dem Auslauf der Auflöse-Stufe (3) und der ersten Fraktionier-Stufe (6) ausschließlich über einen oder mehrere Hydrozyklone erfolgt, wobei die Stoffdichte vor der ersten Fraktionierstufe (6) zumindest 70% der Stoffdichte am Auslauf der Auflöse-Stufe (3) beträgt, und wobei die erste Fraktionierstufe (6) von einem Schlitzsortierer gebildet wird.

2. Verfahren nach Anspruch 1, **dadurch gekennzeichnet, dass** die Stoffdichte der Faserstoffsuspension am Auslauf der Auflöse-Stufe (3) mindestens 5,5 % beträgt und vorzugsweise zwischen 5,5 und 6% liegt.

3. Verfahren nach Anspruch 1 oder 2, **dadurch gekennzeichnet, dass** die Stoffdichte vor
der ersten Fraktionierstufe (6) zumindest 80 % der
Stoffdichte am Auslauf der Auflöse-Stufe (3) beträgt.

4. Verfahren nach einem der vorhergehenden Ansprüche, **dadurch gekennzeichnet, dass** die
Stoffdichte der Faserstoffsuspension bei dem ersten Hydrozyklon zwischen 5 und 6 %, vorzugsweise zwischen 5,3 und 5,7% liegt.

5. Verfahren nach einem der vorhergehenden Ansprüche, **dadurch gekennzeichnet, dass**
das Reject eines Hydrozyklon in wenigstens einen weiteren Hydrozyklon geleitet und dessen Accept der Langfaserfraktion (1) zugeführt wird.

6. Verfahren nach einem der vorhergehenden Ansprüche, **dadurch gekennzeichnet, dass** die
Lang- (1) und die Kurzfaserfraktion (2) über wenigstens eine gemeinsame Entwässerungs-Stufe (10) mit separaten Kammern geführt werden.

7. Verfahren nach einem der Ansprüche 1-5, **dadurch gekennzeichnet, dass** die
Lang- (1) und die Kurzfaserfraktion (2) über separate Entwässerungs-Stufen (11,12,15) geführt werden.

8. Verfahren nach einem der Ansprüche 1-5, **dadurch gekennzeichnet, dass**
nur die Langfaserfraktion (1) über eine Entwässerungs-Stufe (11,15) geführt wird.

9. Verfahren nach einem der vorhergehenden Ansprüche, **dadurch gekennzeichnet, dass**
zumindest eine Behandlungs-Stufe der Langfaserfraktion (1) von einem Disperger (16) gebildet wird.

10. Verfahren nach einem der vorhergehenden Ansprüche, **dadurch gekennzeichnet, dass** die Langfaserfraktion (1) eine weitere Fraktionier-Stufe (18) durchläuft, wobei die anfallenden Fraktionen separat weiterbehandelt werden, und/oder die Kurzfaserfraktion (2) eine weitere Fraktionier-Stufe (9) durchläuft, wobei der Anteil mit den längeren Fasern der Langfaserfraktion zugeführt wird.

11. Verfahren nach einem der vorhergehenden Ansprüche, **dadurch gekennzeichnet, dass**
nur die Langfaserfraktion (1) durch zumindest eine Behandlungs-Stufe in Form eines Sortierers oder Hydrozyklons geführt wird.

12. Verfahren nach einem der vorhergehenden Ansprüche, **dadurch gekennzeichnet, dass** die Entwässerung-Stufen (10,11,12,15) von Schneckenpressen, Doppelsiebpressen, Eindickschnecken oder Scheibeneindickern gebildet werden.

13. Verfahren nach einem der vorhergehenden Ansprüche, **dadurch gekennzeichnet, dass** die Entwässerungs-Stufen (10,11,12,15) keinen Scheibenfilter besitzen.

## Claims

1. Method of forming and treating a fibrous suspension suitable for the production of board or packaging papers, wherein the fibrous suspension is led from a dissolving stage (3) at least partially to a dewatering stage (10, 11, 12, 15) via a plurality of treatment stages, which have a first fractionating stage (6) for forming a short fibre fraction (2) with a high proportion of short fibres and a long fibre fraction (1) with a high proportion of long fibres, wherein the stock consistency of the fibrous suspension at the outlet from the dissolving stage (3) is at least 5%, wherein the stock consistency of the fibrous suspension between the outlet from the outlet stage (3) and the inlet into the first dewatering stage (10, 11, 12, 15) is at least 3%, wherein the cleaning of the fibrous suspension between the outlet from the dissolving stage (3) and the first fractionating stage (6) takes place exclusively via one or a plurality of hydrocyclones, wherein the stock consistency ahead of the first fractionating stage (6) is at least 70% of the stock consistency at the outlet from the dissolving stage (3), and wherein the first fractionating stage (6) is formed by a slotted screen.

2. Method according to Claim 1, **characterized in that** the stock consistency of the fibrous suspension at the outlet from the dissolving stage (3) is at least 5.5% and preferably lies between 5.5 and 6%.

3. Method according to Claim 1 or 2, **characterized in that** the stock consistency ahead of the first fractionating stage (6) is at least 80% of the stock consistency at the outlet from the dissolving stage (3).

4. Method according to one of the preceding claims, **characterized in that** the stock consistency of the fibrous suspension in the first hydrocyclone lies between 5 and 6%, and preferably between 5.3 and 5.7%.

5. Method according to one of the preceding claims, **characterized in that** the rejects from a hydrocyclone are led into at least one further hydrocyclone, and its accepts are supplied to the long fibre fraction (1).

6. Method according to one of the preceding claims, **characterized in that** the long fibre faction (1) and the short fibre fraction (2) are led through at least one common dewatering stage (10) with separate chambers.

7. Method according to one of Claims 1-5, **characterized in that** the long fibre faction (1) and the short fibre fraction (2) are led through separate dewatering stages (11, 12, 15).

8. Method according to one of Claims 1-5, **characterized in that** only the long fibre fraction (1) is led through a dewatering stage (11, 15).

9. Method according to one of the preceding claims, **characterized in that** at least one treatment stage of the long fibre fraction (1) is formed by a disperser (16).

10. Method according to one of the preceding claims, **characterized in that** the long fibre fraction (1) passes through a further fractionating stage (18), wherein the resulting fractions undergo further separate treatment, and/or the short fibre fraction (2) passes through a further fractionating stage (9), wherein the proportion containing the larger fibres is supplied to the long fibre fraction.

11. Method according to one of the preceding claims, **characterized in that** only the long fibre fraction (1) is led through at least one treatment stage in the form of a screen or a hydrocyclone.

12. Method according to one of the preceding claims, **characterized in that** the dewatering stages (10, 11, 12, 15) are formed by screw presses, twin wire presses, screw thickeners or disc thickeners.

13. Method according to one of the preceding claims, **characterized in that** the dewatering stages (10, 11, 12, 15) do not have a disc filter.

## Revendications

1. Procédé pour la formation et le traitement d'une suspension de substances fibreuses appropriée pour la production de carton ou de papiers d'emballage, la suspension de substances fibreuses étant guidée, à partir d'un étage de dissolution (3), via plusieurs étages de traitement, qui comprennent un premier étage de fractionnement (6) pour la formation d'une fraction (2) à fibres courtes, présentant une proportion élevée de fibres courtes, et d'une fraction (1) à fibres longues, présentant une proportion élevée de fibres longues, au moins partiellement jusqu'à un étage de déshydratation (10,11,12,15), la densité en substances de la suspension de substances fibreuses à la sortie de l'étage de dissolution (3) étant d'au moins 5%, la densité en substances de la suspension de substances fibreuses entre la sortie de l'étage de dissolution (3) et l'entrée du premier étage de déshydratation (10,11,12,15) étant d'au moins 3%, la purification de la suspension de substances fibreuses entre la sortie de l'étage de dissolution (3) et le premier étage de fractionnement (6) ayant lieu exclusivement via un ou plusieurs hydrocyclones, la densité en substances avant le premier étage de fractionnement (6) représentant au moins 70% de la densité en substances à la sortie de l'étage de dissolution (3) et le premier étage de fractionnement (6) étant formé par une trieuse à fente.

2. Procédé selon la revendication 1, **caractérisé en ce que** la densité en substances de la suspension de substances fibreuses à la sortie de l'étage de dissolution (3) est d'au moins 5,5% et se situe de préférence entre 5,5 et 6%.

3. Procédé selon la revendication 1 ou 2, **caractérisé en ce que** la densité en substances avant le premier étage de fractionnement (6) représente au moins 80% de la densité en substances à la sortie de l'étage de dissolution (3).

4. Procédé selon l'une quelconque des revendications précédentes, **caractérisé en ce que** la densité en substances de la suspension de substances fibreuses au niveau du premier hydrocyclone se situe entre 5 et 6%, de préférence entre 5,3 et 5,7%.

5. Procédé selon l'une quelconque des revendications précédentes, **caractérisé en ce que** le rejet d'un hydrocyclone est guidé dans au moins un autre hydrocyclone et son accepté est introduit dans la fraction (1) à fibres longues.

6. Procédé selon l'une quelconque des revendications précédentes, **caractérisé en ce que** la fraction (1) à fibres longues et la fraction (2) à fibres courtes sont guidées via au moins un étage de déshydratation (10) commun présentant des chambres séparées.

7. Procédé selon l'une quelconque des revendications 1-5, **caractérisé en ce que** la fraction (1) à fibres longues et la fraction (2) à fibres courtes sont guidées via des étages de déshydratation (11,12,15) séparés.

8. Procédé selon l'une quelconque des revendications 1-5, **caractérisé en ce que** seule la fraction (1) à fibres longues est guidée sur un étage de déshydratation (11,15).

9. Procédé selon l'une quelconque des revendications précédentes, **caractérisé en ce qu'**au moins un étage de traitement de la fraction (1) à fibres longues est formé par un dispositif de dispersion (16).

10. Procédé selon l'une quelconque des revendications précédentes, **caractérisé en ce que** la fraction (1) à fibres longues traverse un autre étage de fractionnement (18), les fractions formées étant traitées davantage, séparément, et/ou la fraction (2) à fibres courtes traverse un autre étage (9) de fractionnement, la proportion de fibres longues étant introduite dans la fraction à fibres longues.

11. Procédé selon l'une quelconque des revendications précédentes, **caractérisé en ce que** seule la fraction (1) à fibres longues est guidée à travers au moins un étage de traitement sous forme d'un dispositif de triage ou d'un hydrocyclone.

12. Procédé selon l'une quelconque des revendications précédentes, **caractérisé en ce que** les étages de déshydratation (10,11,12,15) sont formés par des presses à vis sans fin, des presses à double tamis, des vis sans fin de concentration ou des dispositifs d'épaississement à disque.

13. Procédé selon l'une quelconque des revendications précédentes, **caractérisé en ce que** les étages de déshydratation (10,11,12,15) ne présentent pas de filtre à disques.
